# EUROPÄISCHE PATENTSCHRIFT

(11) **EP 1 815 271 B1**
(45) Veröffentlichungstag und Bekanntmachung des Hinweises auf die Patenterteilung: **28.08.2019**
(21) Anmeldenummer: 05813492.5
(22) Anmeldetag: 23.11.2005
(51) Int. Cl.: G01V 1/00

(54) **ERDBEBENVORWARNSYSTEM**
SEISMIC WARNING SYSTEM
SYSTEME D'ALERTE SISMIQUE

(30) Priorität: 25.11.2004 DE 202004018276 U
(43) Veröffentlichungstag der Anmeldung: 08.08.2007
(73) Patentinhaber: Lachenit, Heinrich, 59399 Olfen (DE); Przybylak, Jürgen, 44581 Castrop-Rauxel (DE); Schultz, Ralf-Dieter, 44581 Castrop-Rauxel (DE)
(72) Erfinder: Lachenit, Heinrich, 59399 Olfen (DE); Przybylak, Jürgen, 44581 Castrop-Rauxel (DE); Schultz, Ralf-Dieter, 44581 Castrop-Rauxel (DE)
(74) Vertreter: Schneiders, Josef
(86) Internationale Anmeldenummer: PCT/EP2005/012537
(87) Internationale Veröffentlichungsnummer: WO 2006/056420

(56) Entgegenhaltungen:
- WO-A-99/09433
- WO-A-2004/021298
- US-A- 5 783 945
- PATENT ABSTRACTS OF JAPAN Bd. 2000, Nr. 12, 3. Januar 2001 (2001-01-03) & JP 2000 253467 A (OSAKA GAS CO LTD), 14. September 2000 (2000-09-14)
- DI STEFANO A ET AL: "A Multi-DSP Based Monitoring Station For Realtime Detection And Evaluation Of Eartquakes" CONFERENCE PROCEEDINGS ARTICLE, 20. Mai 1990 (1990-05-20), Seiten 41-41, XP010002242
- AGRE J R ET AL: "DEVELOPMENT PLATFORM FOR SELF-ORGANIZING WIRELESS SENSOR NETWORKS" PROCEEDINGS OF THE SPIE, SPIE, BELLINGHAM, VA, US, Bd. 3713, 1999, Seiten 257-268, XP001012569 ISSN: 0277-786X

## Beschreibung

Die Erfindung betrifft ein Erdbebenvorwarnsystem mit zwei oder mehr Sensoren zur Erfassung von Erschütterungssignalen, und mit elektrischen Signalverarbeitungsmitteln zur Verarbeitung und Analyse der Erschütterungssignale.

Es ist bekannt, dass zur Detektion von unmittelbar bevorstehenden Erdbeben ausgenutzt werden kann, dass sich die Erschütterungswellen von Erdbeben in charakteristischer Weise durch die Erdkruste ausbreiten. Vom Epizentrum eines Erdbebens aus breiten sich unterschiedliche Typen von Wellen in alle Richtungen aus. Dabei unterscheidet man zwischen den Primärwellen (kurz: P-Wellen) und den Sekundärwellen (kurz: S-Wellen). Bei den P-Wellen handelt es sich um Kompressionswellen, die sich mit deutlich größerer Geschwindigkeit ausbreiten als die S-Wellen. Die S-Wellen sind Scherwellen, die eine wesentlich größere Amplitude haben als die P-Wellen. Die bei Erdbeben auftretenden Zerstörungen werden ausschließlich von den S-Wellen verursacht. Die P-Wellen, die neben der geringeren Amplitude auch ein anderes Schwingungsspektrum haben als die S-Wellen, verursachen keine Zerstörungen und werden vom Menschen in der Regel auch gar nicht wahrgenommen. Aufgrund der größeren Ausbreitungsgeschwindigkeit der P-Wellen treffen diese nach einem Erdbeben an einem vom Epizentrum des Erdbebens entfernten Ort früher ein als die zerstörerischen S-Wellen. Die Detektion von P-Wellen kann daher ausgenutzt werden, um eine Vorwarnung vor dem Eintreffen der S-Welle zu erzeugen. Die zur Verfügung stehende Vorwarnzeit, das heißt die Zeitspanne zwischen dem Eintreffen der P-Welle und dem Eintreffen der nachfolgenden S-Welle, hängt vor allem vom Abstand vom Epizentrum des Erdbebens ab. Bekannt ist es weiterhin, dass aufgrund der geophysikalischen Gesetzmäßigkeiten Abhängigkeiten zwischen den Charakteristiken der P-Wellen und der S-Wellen eines Erdbebens bestehen. Aus diesem Grund kann aus dem Spektrum und der Amplitude einer detektierten P-Welle die Amplitude der nachfolgenden S-Welle und somit die zu erwartende zerstörerische Wirkung vorhergesagt oder zumindest abgeschätzt werden.

Jährlich registrieren Seismologen etwa 20.000 Erdbeben. Millionen von Menschen leben in erdbebengefährdeten Gebieten. Trotz verbesserter erdbebensicherer Bauweise kommen bei schweren Erdbeben immer wieder Menschen zu Schaden. Dies vor allem, weil sich die Menschen zum Zeitpunkt des Eintreffens der S-Welle des Erdbebens in Gebäuden aufhalten, die durch die Erschütterungen einstürzen. Die hohen Opferzahlen von schweren Erdbeben sind außerdem zu einem wesentlichen Anteil auf Brände zurückzuführen, die durch bei dem Erdbeben geborstene Gasleitungen und/oder beschädigte Stromleitungen verursacht werden.

Man erkennt sofort, dass ein dringender Bedarf an zuverlässig funktionierenden Erdbebenvorwarnsystemen besteht. Mittels solcher Erdbebenvorwarnsysteme soll den Menschen die Möglichkeit gegeben werden, Gebäude zu verlassen oder zumindest sichere Bereiche innerhalb von Gebäuden aufzusuchen, wenn ein potenziell gefährliches Erdbeben unmittelbar bevorsteht. Moderne Erdbebenwarngeräte, die in der Lage sind, eine P-Welle eines Erdbebens zu detektieren, sind geeignet, mit ausreichender Vorwarnzeit Alarm zu geben, sodass die Opferzahlen bei schweren Erdbeben signifikant reduziert werden können.

Ein Erdbebenvorwarnsystem der eingangs genannten Art ist beispielsweise aus der WO 99/09433 A1 oder WO2004/021298 bekannt. Das vorbekannte System ist geeignet, bevorstehende Erdbeben zu detektieren, indem mittels geeigneter Erschütterungssensoren und Signalverarbeitungsmittel die der potenziell zerstörerischen S-Welle eines Erdbebens vorangehende P-Welle registriert und analysiert wird. Es ist bekannt, dass zur zuverlässigen Detektion von P-Wellen eines Erdbebens empfindliche Erschütterungssensoren erforderlich sind. Aufgrund der nötigen hohen Empfindlichkeit sind Erdbebenwarngeräte, deren Funktion auf der Detektion von P-Wellen basiert, anfällig für Fehlalarme. Es besteht folglich ein nur schwer lösbarer Zielkonflikt zwischen der zuverlässigen und ausreichend empfindlichen Detektion von P-Wellen einerseits und der ebenso zuverlässigen Vermeidung von Fehlalarmen andererseits. Insbesondere bei Erdbebenvorwarnsystemen, deren Erschütterungssensoren an Gebäuden in der Nähe von Straßen oder Eisenbahnlinien angebracht sind, besteht das Problem, dass die durch den Straßen- bzw. Eisenbahnverkehr hervorgerufenen Bodenerschütterungen nur schwer von P-Wellen eines Erdbebens unterschieden werden können. Um dieses Problem zu lösen, wird in der genannten WO 99/09433 A1 vorgeschlagen, eine Mehrzahl von Erschütterungssensoren an verschiedenen Stellen eines Gebäudes anzubringen. Die von den einzelnen Sensoren erfassten Erschütterungssignale werden über geeignete (auch drahtlose) Übertragungsleitungen an eine zentrale Signalverarbeitungsvorrichtung des vorbekannten Erdbebenvorwarnsystems übertragen. Diese zentrale Signalverarbeitungseinrichtung wertet die von den verschiedenen Sensoren eintreffenden Erschütterungssignale aus. Wenn bei der Analyse der Erschütterungssignale festgestellt wird, dass zwei oder mehr Sensoren für P-Wellen charakteristische Erschütterungssignale mit zeitlicher Überlappung detektiert haben, wird ein Alarm ausgelöst. Bei dem vorbekannten Erdbebenvorwarnsystem wird also versucht, Fehlalarme dadurch zu vermeiden, dass eine Alarmauslösung nur erfolgt, wenn an verschiedenen Orten angebrachte Erschütterungssensoren übereinstimmend P-Wellen registriert haben. Dadurch wird wirksam vermieden, dass eine lokal auftretende Bodenerschütterung, die beispielsweise von einem vorbeifahrenden schweren Fahrzeug ausgelöst wird, als P-Welle eines Erdbebens registriert wird und zur Auslösung eines Fehlalarms führt. Um sicherzustellen, dass zuverlässig zwischen P-Wellen eines Erdbebens und gewöhnlichen, unbedeutenden Bodenerschütterungen unterschieden werden kann, ohne Einschränkungen hinsichtlich der Empfindlichkeit des Erdbebenvorwarnsystems hinnehmen zu müssen, schlägt die genannte WO 99/09433 A1 weiterhin vor, in einem Datenspeicher der zentralen Signalverarbeitungseinheit ortstypische, natürliche Erschütterungsmuster zu speichern. Eine Alarmgabe erfolgt bei dem vorbekannten System nur, wenn Erschütterungen registriert werden, deren Spektrum von dem gespeicherten Spektrum abweicht.

Bei dem vorbekannten Erdbebenvorwarnsystem ist nachteilig, dass dieses nicht sehr flexibel einsetzbar ist. Ein weiterer Nachteil ist, dass die Funktion des vorbekannten Systems insgesamt beeinträchtigt ist, wenn nur Teilkomponenten des Systems ausfallen.

Das vorbekannte System besteht, wie bereits ausgeführt, aus einer zentralen Signalverarbeitungseinheit, an welche eine Mehrzahl von Sensoren anschließbar sind. Für jeden anschließbaren Erschütterungssensor verfügt die zentrale Verarbeitungseinheit über einen eigenen Eingangsanschluss. Nachteilig ist daher, dass maximal so viele Sensoren anschließbar sind, wie Eingangsanschlüsse an der zentralen Signalverarbeitungseinheit vorhanden sind. Dementsprechend ist das vorbekannte System nur in Grenzen erweiterbar. Besonders problematisch ist allerdings, dass die Funktion des vorbekannten Systems eingeschränkt ist, schon wenn nur einzelne der Sensoren ausfallen. Da die für die Alarmgabe wesentlichen Funktionen in der zentralen Signalverarbeitungseinheit zusammengefasst sind, ist bei einem Defekt der zentralen Verarbeitungseinheit das Erdbebenvorwarnsystem insgesamt außer Funktion gesetzt. Mangels Redundanz ist daher bei dem vorbekannten System die Zuverlässigkeit und damit die Sicherheit hinsichtlich der Erdbebenvorwarnung nicht zufrieden stellend.

Davon ausgehend ist es Aufgabe der Erfindung, ein Erdbebenvorwarnsystem bereitzustellen, das flexibel einsetzbar ist. Dabei soll es möglich sein, die verschiedensten Typen von Bauwerken (z.B. Häuser, Brücken, Tunnel, Straßen, Kanalisation usw.) mit möglichst geringem Kostenaufwand zu überwachen. Außerdem soll eine redundante und damit zuverlässige und sichere Erdbebenvorwarnung ermöglicht werden.

Diese Aufgabe löst die Erfindung ausgehend von einem Erdbebenvorwarnsystem der eingangs genannten Art dadurch, dass ein System gemäß Anspruch 1 wenigstens zwei Detektionseinheiten umfasst, die jeweils einen Erschütterungssensor und elektronische Signalverarbeitungsmittel aufweisen, wobei die Signalverarbeitungsmittel jeder Detektionseinheit so eingerichtet sind, dass diese Primärwellen von Erdbeben anhand des Signals des Erschütterungssensors detektieren und wobei die Detektionseinheit über einen elektronischen Datenbus miteinander verbunden.

Weiterhin kommunizieren die Detektionseinheiten des erfindungsgemäßen Erdbebenvorwarnsystems in einem Master-/Slave-Betrieb, und zwar derart, dass eine im Master-Modus betriebene Detektionseinheit die im Slave-Modus betriebenen Detektionseinheiten periodisch abfragt. Demgemäß arbeiten zwar die einzelnen Detektionseinheiten unabhängig voneinander und führen auch die Analyse der Erschütterungs signale unabhängig voneinander aus. Allein die im Master-Modus betriebene Detektionseinheit führt aber die Ergebnisse der Signalanalysen der einzelnen im Slave-Modus betriebenen Detektionseinheiten zusammen . Die im Master- Modus betriebene Detektionseinheit kann dann derart eingerichtet sein, dass diese in Abhängigkeit vom Ergebnis der Abfrage der im Slave-Modus betriebenen Detektionseinheiten einen Alarmgeber aktiviert. Da die im Master- Modus betriebene Detektionseinheit selbst auch über einen Erschütterungssensor und entsprechende elektronische Signalverarbeitungsmittel verfügt, kann deren Signalanalyseergebnis bei der Alarmgabe selbstverständlich auch berücksichtigt werden. Sinnvollerweise sollten die Detektionseinheiten so eingerichtet sein, dass jede der über den Datenbus miteinander verbundenen Einheiten gleichermaßen im Master- oder im Slave-Modus betrieben werden können. Insbesondere sollte, etwa durch geeignete Programmierung und Konfiguration, sichergestellt sein, dass eine im Slave-Modus betriebene Detektionseiheit automatisch die Funktion eines Masters übernimmt, sobald die im Master-Modus betriebene Einheit ausfällt oder deren Verbindung zum Datenbus unterbrochen wird. Nur dann ist gewährleistet, dass das System insgesamt immer funktionsfähig bleibt.

Die Erfindung basiert auf der Erkenntnis, dass ein zuverlässig funktionierendes und damit sicheres Erdbebenvorwarnsystem geschaffen werden kann, wenn dieses mittels zwei oder mehr separater und unabhängig voneinander funktionstüchtiger Detektionseinheiten aufgebaut wird. Ein wesentlicher Unterschied des erfindungsgemäßen Systems gegenüber dem Stand der Technik besteht nämlich darin, dass jeder der zwei oder mehr Detektionseinheiten jeweils wenigstens ein Erschütterungssensor sowie eigene elektronische Signalverarbeitungsmittel zur Verarbeitung und Analyse der von dem Erschütterungssensor jeweils registrierten Bodenerschütterungssignale zugeordnet sind. Damit ist jede Detektionseinheit dazu in der Lage, P-Wellen von potenziell gefährlichen Erdbeben zu detektieren. Die gewünschte Redundanz ergibt sich dadurch, dass die einzelnen Detektionseinheiten des erfindungsgemäßen Systems über einen elektronischen Datenbus miteinander verbunden sind. Über diesen Datenbus können die Detektionseinheiten miteinander kommunizieren, sodass beispielsweise feststellbar ist, ob zwei oder mehr der Detektionseinheiten übereinstimmend eine P-Welle detektiert haben. Hiervon kann, insbesondere zur Vermeidung von Fehlalarmen, die Alarmgabe bei dem erfindungsgemäßen Erdbebenvorwarnsystem abhängig gemacht werden.

Ein wesentlicher Vorteil des erfindungsgemäßen Erdbebenvorwarnsystems ist, dass dieses beliebig erweiterbar und skalierbar ist. Bereits mittels nur zweier Detektionseinheiten ist eine sichere und fehlalarmresistente Erdbebenvorwarnung möglich. Durch Hinzufügen weiterer Detektionseinheiten kann die Sicherheit gesteigert werden, damit auch bei Ausfall einzelner Detektionseinheiten immer noch eine ausreichende Zuverlässigkeit gewährleistet ist. Die Skalierbarkeit ist außerdem von Vorteil, wenn in größeren Gebäuden oder Gebäudekomplexen ein stufenweiser Ausbau des Erdbebenvorwarnsystems gewünscht wird.

Der modulare Aufbau des erfindungsgemäßen Erdbebenvorwarnsystems hat außerdem den Vorteil, dass mittels standardisierter Detektionseinheiten, die über den elektronischen Datenbus miteinander verbunden sind, beliebige Typen von Gebäuden und Gebäudekomplexen kostengünstig und gleichzeitig mit einem hohen Maß an Sicherheit überwacht werden können.

Als besonders sinnvoll hat es sich herausgestellt, wenn mittels der Signalverarbeitungsmittel der Detektionseinheiten bei dem erfindungsgemäßen System aus den Erschütterungssignalen von detektierten Primärwellen Kenngrößen berechnet werden, die ein Maß für die zerstörerische Wirkung von nachfolgend zu erwartenden Sekundärwellen sind. Eine Alarmgabe kann dann in Abhängigkeit vom Ergebnis eines Vergleichs der berechneten Kenngrößen mit entsprechenden Schwellwerten erfolgen. Bei dem erfindungsgemäßen System werden sinnvollerweise Erschütterungssensoren zur Aufnahme von Beschleunigswerten in drei Raumrichtungen verwendet. Die entsprechenden Signale können dann unter Berücksichtigung des Frequenzspektrums und unter Gewichtung der in den drei Raumrichtungen erfassten Beschleunigungskomponenten in eine Kenngröße umgerechnet werden. Diese Zahl kann sodann in einfacher Weise mit einem Schwellwert verglichen werden, wobei dieser Schwellwert angibt, ab welchem Wert der auf der Basis der registrierten P-Welle ermittelten Kenngröße mit einer S-Welle gerechnet werden muss, die zerstörerische Wirkungen haben könnte. Gemäß der Erfindung wird also eine P-Welle nicht nur detektiert, sondern auch bewertet. Dieses Vorgehen hat gegenüber den aus dem Stand der Technik bekannten Systemen den Vorteil, dass mit Sicherheit nur dann ein Alarm ausgelöst wird, wenn tatsächlich Gefahr droht. In den typischen Erdbebengebieten treten praktisch täglich kleinere Erdstöße auf. Mit dem erfindungsgemäßen System kann vermieden werden, dass in diesen Gebieten ständig unnötig Alarm gegeben wird. Ständige Fehlalarme würden zwangsläufig binnen kürzester Zeit dazu führen, dass Alarme des Vorwarnsystems nicht mehr Ernst genommen werden. Eine gänzlich fehlende Akzeptanz des Systems wäre schließlich die Folge.

Der elektronische Datenbus des erfindungsgemäßen Systems kann konventionell durch entsprechende Datenleitungen in Form von Kabelverbindungen realisiert sein. Besonders vorteilhaft ist es aber auch, den Datenbus insgesamt, oder zumindest Teile der entsprechenden Signalübertragungswege, durch Funkverbindungen zu realisieren. Geeignete Standardkomponenten zur drahtlosen digitalen Signalübertragung sind heutzutage zu geringen Kosten kommerziell erhältlich. Ein drahtloser Datenbus ermöglicht es vorteilhafterweise, das erfindungsgemäße Erdbebenvorwarnsystem mit geringstem Aufwand kostengünstig zu installieren. Insbesondere wenn Gebäudekomplexe aus mehreren separaten Gebäuden überwacht werden sollen, sind Funkverbindungen offensichtlich besonders praktisch.

Um Fehlalarme zu vermeiden, ist es zweckmäßig, dass die im Master-Modus betriebene Detektionseinheit außerdem derart eingerichtet ist, dass der Alarmgeber nur aktiviert wird, wenn die Signalverarbeitungsmittel von wenigstens zwei Detektionseinheiten zeitlich korreliert eine Primärwelle detektieren. Auf diese Weise wird verhindert, dass unbedeutende lokale Bodenerschütterungen, beispielsweise durch vorbeifahrende schwere Fahrzeuge, zu einer fehlerhaften Alarmauslösung führen.

Gemäß einer vorteilhaften Ausgestaltung des erfindungsgemäßen Erdbebenvorwarnsystems ist der Alarmgeber von den Detektionseinheiten separat. Die Aktivierung des Alarmgebers erfolgt dann von den Detektionseinheiten gesteuert über den Datenbus. Dies ermöglicht es, die Alarmgeber in größeren Gebäuden oder Gebäudekomplexen räumlich entfernt von den Detektionseinheiten anzuordnen. Die Detektionseinheiten mit den darin enthaltenen Erschütterungssensoren müssen zur Erfassung von Bodenerschütterungen bodennah, d. h. zumeist im Keller oder im Bereich des Fundaments eines Gebäudes angeordnet sein. Akustische oder optische Alarmgeber müssen zur Vorwarnung aber dort angebracht sein, wo sich Personen aufhalten. In mehrgeschossigen Gebäuden ist es erforderlich, dass sich in jedem Stockwerk oder sogar in mehreren Räumen der einzelnen Stockwerke separate optische oder akustische Alarmgeber befinden, damit sichergestellt ist, dass eine Erdbebenvorwarnung wahrgenommen wird.

Besonders sinnvoll ist es, wenn das modulare Erdbebenvorwarnsystem gemäß der Erfindung wenigstens eine an den Datenbus angeschlossene Gebäudetechnikeinheit zur Steuerung von zumindest Teilkomponenten der Gebäudetechnik eines mittels des Erdbebenvorwarnsystems überwachten Gebäudes aufweist. Mittels der Gebäudetechnikeinheit können beispielsweise Gas-, Strom- und auch Wasserleitungen im Falle der Detektion einer Primärwelle eines potenziell gefährlichen Erdbebens gesperrt bzw. abgeschaltet werden. Die Gebäudetechnikeinheit des erfindungsgemäßen Erdbebenvorwarnsystems kann weiterhin dazu genutzt werden, beispielsweise Aufzüge in eine sichere Parkposition zu fahren oder auch um Datensicherungen von in den betreffenden Gebäuden befindlichen Datenverarbeitungsanlagen zu initiieren. Außerdem kann die Gebäudetechnikeinheit, wenn diese ein entsprechendes Steuersignal über den Datenbus erhält, Notstromaggregate einschalten, Notbeleuchtungen aktivieren und/oder Not- und Sicherheitsausgänge automatisch öffnen. In Industrieanlagen kann die Gebäudetechnikeinheit des erfindungsgemäßen Erdbebenvorwarnsystems außerdem dazu genutzt werden, Maschinen oder sonstige Fertigungsanlagen zu steuern, damit Personen- und Sachschäden bei einem bevorstehenden Erdbeben soweit wie möglich vermieden werden.

Nützlich ist es in diesem Zusammenhang außerdem, wenn die Signalverarbeitungsmittel der Detektionseinheiten zusätzlich so eingerichtet sind, dass diese Sekundärwellen von Erdbeben anhand der Signale der Erschütterungssensoren detektieren, wobei zumindest Teilkomponenten der Gebäudetechnik in Abhängigkeit von der Detektion von Sekundärwellen steuerbar sind. Es ist zum Teil nicht sinnvoll, die gesamte Gebäudetechnik schon zum Zeitpunkt der Detektion einer P-Welle abzuschalten. Bestimmte sicherheitrelevante Gebäudefunktionen sollten vielmehr so lange wie möglich in Betrieb gehalten werden können. Demenstprechend besteht mit dem erfindungsgemäßen System die Möglichkeit, vorwählbare Komponenten der Gebäudetechnik erst bei der Detektion einer S-Welle entweder abzuschalten oder sonstwie geeignet anzusteuern. Auch eine zeitlich abgestufte Steuerung der Gebäudetechnik kann wünschenswert sein, beispielsweise um den Strom erst dann abzuschalten, wenn bei einem drohenden Beben die Aufzüge des überwachten Gebäudes in eine sichere Parkposition gefahren sind.

Weiterhin kann das erfindungsgemäße Erdbebenvorwarnsystem wenigstens eine an den Datenbus angeschlossene Bedieneinheit mit Bedien- und Anzeigeelementen zur Steuerung der Detektionseinheiten und zur Abfrage und Anzeige des Betriebszustands des Systems aufweisen. Mit derartigen Bedieneinheiten kann eine Steuerzentrale des erfindungsgemäßen Erdbebenvorwarnsystems, beispielsweise beim Pförtner eines Gebäudes, realisiert werden.

Entsprechend dem modularen Konzept des erfindungsgemäßen Erdbebenvorwarnsystems kann dieses eine Energieversorgungseinheit aufweisen, durch welche die Einzelkomponenten des Systems - über den Datenbus oder vorzugsweise über separate Leitungen - mit elektrischer Energie versorgt werden. Die Energieversorgungseinheit kann dabei insbesondere eine von den übrigen Komponenten, nämlich den Detektionseinheiten, den Gebäudetechnikeinheiten sowie den Bedieneinheiten, separates Modul sein. Dies ermöglicht es, die Einzelkomponenten des Systems, insbesondere die Detektionseinheiten, in einem zu überwachenden Gebäude dort anzuordnen, wo kein Stromanschluss zur Verfügung steht. Die Energieversorgungseinheit selbst kann direkt an ein Stromversorgungsnetz angeschlossen sein. Zur Notversorgung des Erdbebenvorwarnsystems ist es vorteilhaft, wenn die Energieversorgungseinheit eine Batterie oder einen Akkumulator umfasst.

Besonders sinnvoll ist es, wenn die Energieversorgungseinheit des erfindungsgemäßen Erdbebenvorwarnsystems Anschlüsse für optische und/oder akustische Alarmgeber aufweist. Diese Alarmgeber sind dann über den Datenbus von den Detektionseinheiten aus aktivierbar. Geeignete Alarmgeber, wie beispielsweise Blitzlampen oder Sirenen, benötigen vergleichsweise viel Energie. Aus diesem Grund ist es zweckmäßig, die Alarmgeber direkt an die Energieversorgungseinheit anzuschließen, da von dieser die erforderliche elektrische Energie direkt bereitgestellt werden kann.

Als weitere Ausbaustufe besteht die Möglichkeit, bei dem erfindungsgemäßen System eine Speichereinheit zur kontinuierlichen Aufzeichnung und Speicherung der von den Detektionseinheiten erfassten Bodenerschütterungssignale vorzusehen. In diesem Zusammenhang ist es außerdem sinnvoll, das System mit einer Datenfernkommunikationseinheit auszustatten, um eine Datenkommunikation zwischen räumlich entfernten Systemen oder auch mit zentralen Servern zu ermöglichen. Damit können regionale und auch überregionale Netzwerke von Erdbebenvorwarnsystemen geschaffen werden, und die ständig verfügbaren Erschütterungsmessdaten stehen für wissenschaftliche Zwecke zur Verfügung. Im Falle von Erdbeben können die erfassten Daten zentral gesammelt und ausgewertet werden, um dann auf dieser Grundlage die erforderlichen Katastrophenschutz- und Rettungsmaßnahmen effektiv zu koordinieren. In erdbebengefährdeten Regionen ist die regionale Vernetzung von Vorwarnsystemen höchst sinnvoll, weil dadurch die effektiven Vorwarnzeiten signifikant erhöht werden können. Bei der Detektion von P-Wellen an einem bestimmten Ort können beispielsweise Vorwarnungen auch an gefährdeten Orten in einer vorbestimmten Umgebung erzeugt werden, und zwar lange bevor an diesen Orten überhaupt irgendwelche Bodenerschütterungen registrierbar sind.

Ausführungsbeispiele der Erfindung werden im Folgenden anhand der Figuren erläutert. Es zeigen:
- Fig. 1: Darstellung des erfindungsgemäßen Erdbebenvorwarnsystems mit zwei Detektionseinheiten als Blockdiagramm;
- Fig. 2: erfindungsgemäßes Erdbebenvorwarnsystem mit Gebäudetechnikeinheit;
- Fig. 3: Einsatz des Erdbebenvorwarnsystems gemäß der Erfindung zur Überwachung eines Hochhauses;
- Fig. 4: Industriegebäudekomplex mit erfindungsgemäßem Erdbebenvorwarnsystem.

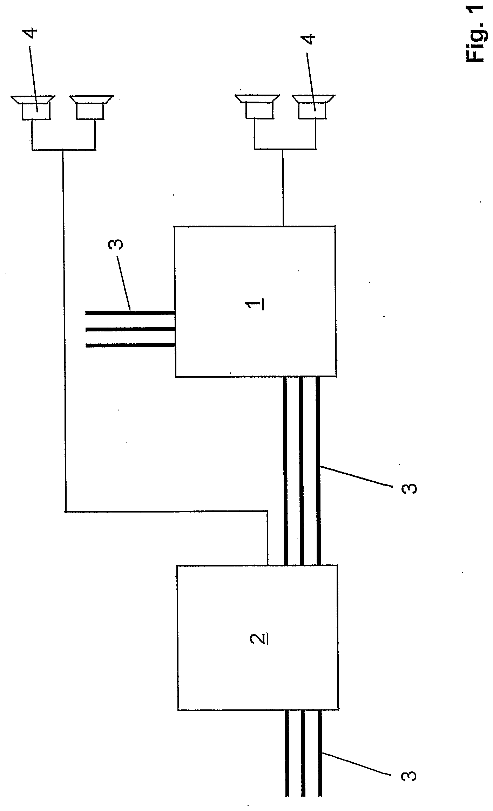

Das in der Fig. 1 dargestellte Erdbebenvorwarnsystem besteht aus zwei Detektionseinheiten 1 und 2, die jeweils einen in der Figur nicht dargestellten Erschütterungssensor sowie ebenfalls in der Figur nicht dargestellte Signalverarbeitungsmittel zur Verarbeitung und Analyse der Signale des Erschütterungssensors aufweisen. Die Detektionseinheiten 1 und 2 sind über einen elektronischen Datenbus 3 miteinander verbunden. An jede der Detektionseinheiten 1 und 2 sind Sirenen 4 als akustische Alarmgeber angeschlossen. Die Signalverarbeitungsmittel der Detektionseinheiten 1 und 2 sind derart eingerichtet, dass diese Primärwellen von Erdbeben anhand der Signale der jeweiligen Erschütterungssensoren detektieren. Die Detektionseinheiten 1 und 2 kommunizieren in einem Master-/Slave-Betrieb über den Datenbus 3 miteinander. Die im Master-Modus betriebene Detektionseinheit 2 fragt dabei die im Slave-Modus betriebene Detektionseinheit 1 periodisch ab. Somit erhält die im Master-Modus betriebene Detektionseinheit 2 über den Datenbus 3 die Information, ob die im Slave-Modus betriebene Einheit 1 die Primärwelle eines Erdbebens detektiert hat oder nicht. In Abhängigkeit vom Ergebnis dieser Abfrage kann die im Master-Modus betriebene Detektionseinheit 2 die Alarmgeber 4 aktivieren. Zur Aktivierung der an die im Slave-Modus betriebene Detektionseinheit 1 angeschlossenen Sirenen 4 übermittelt die Detektionseinheit 2 einen entsprechenden Befehl über den Datenbus 3 an die Detektionseinheit 1. Die im Master-Modus betriebene Detektionseinheit 2 ist zur Vermeidung von Fehlalarmen derart eingerichtet, dass die Sirenen 4 nur aktiviert werden, wenn die Signalverarbeitungsmittel beider Detektionseinheiten 1 und 2 zeitlich korreliert eine Primärwelle detektiert haben.

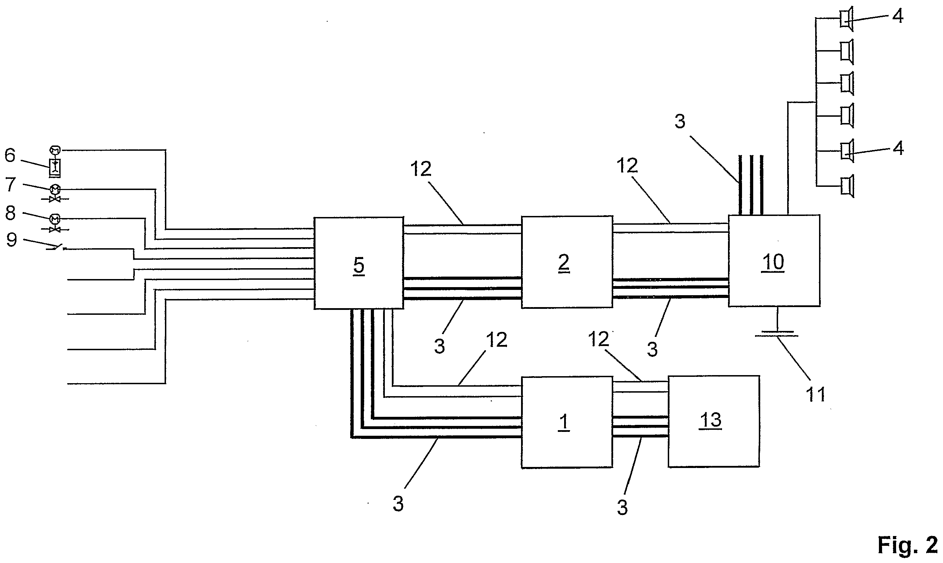

Die Fig. 2 zeigt eine komplexere Variante des erfindungsgemäßen Erdbebenvorwarnsystems. Auch bei dem in der Fig. 2 dargestellten System sind eine im Master-Modus betriebene Detektionseinheit 2 sowie eine im Slave-Modus betriebene Detektionseinheit 1, die über einen elektronischen Datenbus 3 miteinander verbunden sind, vorhanden. Zusätzlich weist das dargestellte System eine Gebäudetechnikeinheit 5 auf, die ebenfalls an den Datenbus 3 angeschlossen ist. Die Gebäudetechnikeinheit 5 wird über den Datenbus 3 von der im Master-Modus betriebenen Detektionseinheit 2 angesteuert. Die Gebäudetechnikeinheit 5 dient zur Steuerung verschiedener Komponenten der Gebäudetechnik des überwachten Gebäudes. Dies sind eine Aufzugsteuerung 6, mittels welcher ein Aufzug in eine sichere Parkposition fahrbar ist, Magnetventile 7 und 8 zur Unterbrechung von Gas- bzw. Wasserleitungen im Falle eines bevorstehenden Erdbebens, sowie ein elektrischer Hauptschalter 9 zur Unterbrechung der Stromversorgung des Gebäudes. Zur Energieversorgung der Komponenten des in der Fig. 2 dargestellten Erdbebenvorwarnsystems dient eine Energieversorgungseinheit 10, die an ein Stromversorgungsnetz 11 angeschlossen ist. Die Energieversorgungseinheit 10 umfasst ein Netzteil, das eine Gleichspannung, beispielsweise 15 V, aus der Netzspannung generiert und über eine Stromversorgungsleitung 12 den einzelnen Komponenten des Systems zur Verfügung stellt. Gleichzeitig umfasst die Energieversorgungseinheit einen in der Figur nicht näher dargestellten Akkumulator, sodass im Falle eines Stromausfalls eine Notversorgung des Systems gewährleistet ist. Der Akkumulator wird mittels der Energieversorgungseinheit 10 ständig im geladenen Zustand gehalten. Außerdem sind an die Energieversorgungseinheit 10 Alarmsirenen 4 angeschlossen. Diese Alarmsirenen sind wiederum von der im Master-Modus betriebenen Detektionseinheit 2 über den Datenbus 3 aktivierbar. Aufgrund der erforderlichen hohen elektrischen Leistung sind die Sirenen 4 direkt an die Energieversorgungseinheit 10 angeschlossen. Bei dem in der Fig. 2 dargestellten System ist schließlich noch eine Bedieneinheit 13 vorgesehen. Die Bedieneinheit 13 weist Bedien- und Anzeigelemente, beispielsweise in Form von Bedienknöpfen und LCD-Anzeigen, zur Steuerung der Detektionseinheiten 1, 2, zur Konfiguration der Gebäudetechnikeinheit 5 und zur Überwachung des Betriebszustands sämtlicher Komponenten des Erdbebenvorwarnsystems auf. Die Bedieneinheit 13 bildet gleichsam die Steuer- und Überwachungszentrale des Erdbebenvorwarnsystems.

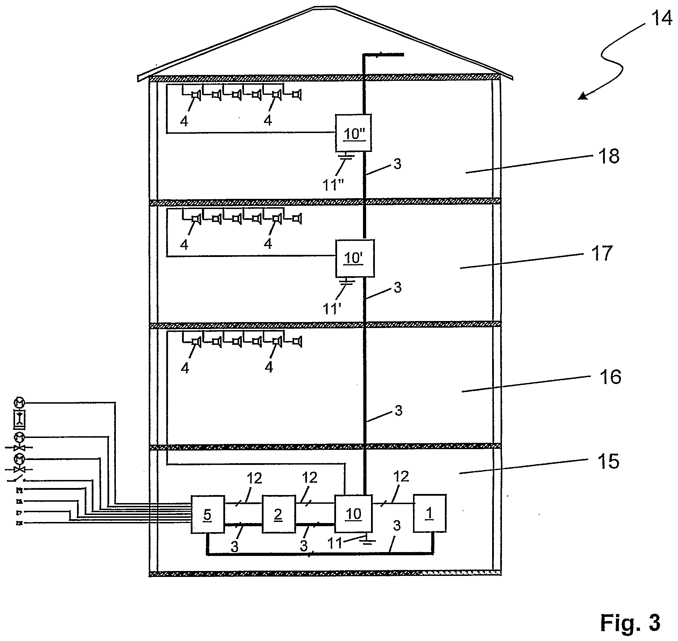

Die Fig. 3 veranschaulicht die Überwachung eines Hochhauses 14 mit dem erfindungsgemäßen Erdbebenvorwarnsystem. Im Kellergeschoss 15 des Hochhauses 14 sind zwei Detektionseinheiten 1 und 2 angebracht, die wiederum in einem Master-/Slave-Betrieb arbeiten. Die Detektionseinheiten sind an den tragenden Wänden des Gebäudes 14 befestigt, sodass Bodenerschütterungen mittels der Erschütterungssensoren der Detektionseinheiten 1 und 2 direkt und ohne Verzerrungen registriert werden. Weiterhin ist eine Gebäudetechnikeinheit 5 vorgesehen, die die oben mit Bezug auf die Fig 2 beschriebenen Funktionen erfüllt. Die Stromversorgung der Komponenten des Erdbebenvorwarnsystems erfolgt über eine Energieversorgungseinheit 10, die sich ebenfalls im Kellergeschoss 15 des Hochhauses 14 befindet. Die Detektionseinheiten 1, 2, die Gebäudetechnikeinheit 5 und die Energieversorgungseinheit 10 sind über einen Datenbus 3 sowie über eine Stromversorgungsleitung 12 miteinander verbunden. Im Erdgeschoss 16 sowie in den Obergeschossen 17 und 18 des Gebäudes 14 sind jeweils Alarmsirenen 4 angeordnet, die im Falle einer Erdbebenvorwarnung von den in dem Gebäude 14 sich aufhaltenden Personen wahrnehmbare akustische Alarmsignale erzeugen. Die im Erdgeschoss 16 befindlichen Sirenen 4 sind direkt an die im Keller 15 angeordnete Energieversorgungseinheit 10 angeschlossen. Für die Sirenen 4 in den Obergeschossen 17 und 18 sind jeweils eigene Energieversorgungseinheiten 10' bzw. 10" vorgesehen. Über den in die Stockwerke 16, 17 und 18 geführten Datenbus 3, mit dem die Energieversorgungseinheiten 10, 10' und 10" verbunden sind, werden in sämtlichen Stockwerken die Alarmsirenen 4 aktiviert, wobei die Alarmgebung von der im Master-Modus betriebenen Detektionseinheit 2 im Keller 15 des Gebäudes 14 gesteuert wird. Die Energieversorgungseinheiten 10, 10' und 10" verfügen jeweils über einen Netzanschluss 11, 11' bzw. 11".

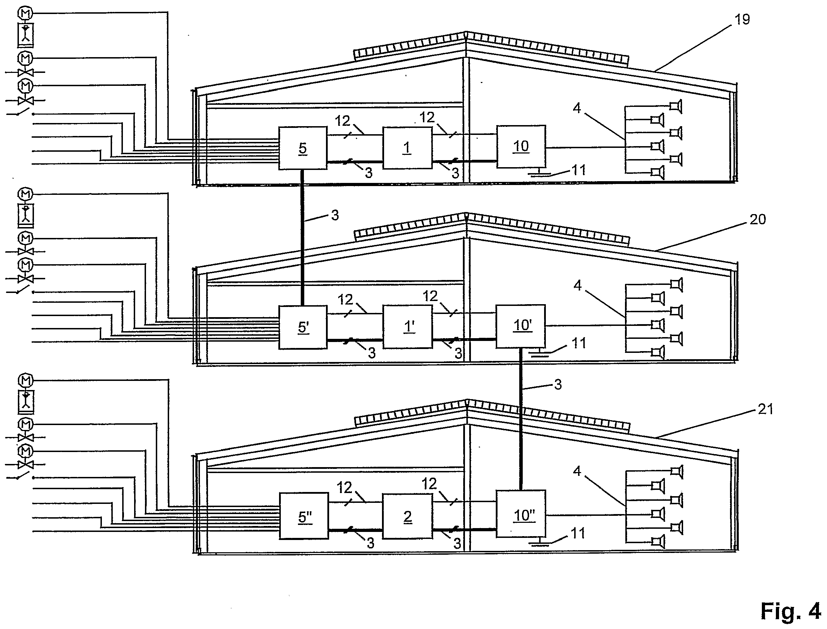

Die Fig. 4 zeigt das Erdbebenvorwarnsystem gemäß der Erfindung zur Überwachung eines Gebäudekomplexes, der aus drei Industriehallen 19, 20 und 21 besteht. In jeder der Hallen 19, 20 und 21 befindet sich eine Detektionseinheit 1, 1' bzw. 2. Diese sind über einen Datenbus 3 miteinander verbunden. Über den Datenbus 3 stehen die Gebäude 19, 20 und 21 untereinander in Verbindung. Wiederum werden die Detektionseinheiten 1, 1' und 2 in einem Master-/Slave-Betrieb genutzt. Die Detektionseinheiten 1 und 1' werden im Slave-Modus betrieben, während die Detektionseinheit 2 im Master-Modus betrieben wird. Über den Datenbus 3 fragt die im Master-Modus betriebene Detektionseinheit 2 die Detektionseinheiten 1 und 1' zyklisch ab. Eine Alarmgebung erfolgt, wenn alle Detektionseinheiten 1, 1' und 2 mit zeitlicher Korrelation die P-Welle eines Erdbebens durch Analyse der registrierten Bodenerschütterungssignale detektieren. Für jedes Gebäude 19, 20 und 21 ist jeweils eine Gebäudetechnikeinheit 5, 5' bzw. 5" vorgesehen. Diese erfüllen die oben bereits beschriebenen Funktionen für das jeweilige Gebäude. Jedes Gebäude 19, 20 und 21 ist mit einer eigenen Energieversorgungseinheit 10, 10' bzw. 10" zur Energieversorgung der jeweiligen Komponenten des Systems ausgestattet. An die Energieversorgungseinheiten 10, 10' und 10" sind die Alarmsirenen 4 angeschlossen.

## Patentansprüche

1. Erdbebenvorwarnsystem mit zwei oder mehr Sensoren zur Erfassung von Erschütterungssignalen, und mit elektronischen Signalverarbeitungsmitteln zur Verarbeitung und Analyse der Erschütterungssignale, wobei dass das System wenigstens zwei Detektionseinheiten (1, 2) umfasst, die jeweils einen Erschütterungssensor und elektronische Signalverarbeitungsmittel aufweisen, wobei die Signalverarbeitungsmittel jeder Detektionseinheit (1, 2) so eingerichtet sind, dass diese Primärwellen von Erdbeben anhand des Signals des Erschütterungssensors detektieren, und wobei die Detektionseinheiten (1, 2) über einen elektronischen Datenbus (3) miteinander verbunden sind, **dadurch gekennzeichnet, dass** die Detektionseinheiten (1, 2) in einem Master-/Slave-Betrieb über den Datenbus (3) miteinander kommunizieren, und zwar derart, dass eine im Master-Modus betriebene Detektionseinheit (2) die im Slave-Modus betriebenen Detektionseinheiten (1) periodisch abfragt, wobei die im Master-Modus betriebene Detektionseinheit (2) derart eingerichtet ist, dass diese in Abhängigkeit vom Ergebnis der Abfrage der im Slave-Modus betriebenen Detektionseinheiten (1) den Alarmgeber (4) aktiviert, wobei die Detektionseinheiten (1, 2) so eingerichtet sind, dass jede der über den Datenbus miteinander verbundenen Detektionseinheiten (1, 2) gleichermaßen im Master- oder im Slave-Modus betrieben werden können, wobei eine im Slave-Modus betriebene Detektionseinheit (1) automatisch die Funktion eines Masters übernimmt, sobald die im Master-Modus betriebene Detektionseinheit (2) ausfällt oder deren Verbindung zum Datenbus (3) unterbrochen ist.

2. Erdbebenvorwarnsystem nach Anspruch 1, **dadurch gekennzeichnet, dass** die Signalverarbeitungsmittel weiterhin derart eingerichtet sind, dass diese aus den Erschütterungssignalen von detektierten Primärwellen Kenngrößen berechnen, die ein Maß für die zerstörerische Wirkung von nachfolgenden Sekundärwellen sind, und dass diese die berechneten Kenngrößen mit Schwellwerten vergleichen, wobei in Abhängigkeit vom Ergebnis des Vergleichs der Alarmgeber (4) aktiviert wird.

3. Erdbebenvorwarnsystem nach einem der Ansprüche 1 und 2, **dadurch gekennzeichnet, dass** der elektronische Datenbus (3) zumindest teilweise als Funkverbindung ausgebildet ist.

4. Erdbebenvorwarnsystem nach einem der Ansprüche 1 bis 3, **dadurch gekennzeichnet, dass** die im Master-Modus betriebene Detektionseinheit (2) außerdem derart eingerichtet ist, dass der Alarmgeber (4) nur aktiviert wird, wenn die Signalverarbeitungsmittel von wenigstens zwei Detektionseinheiten (1, 2) zeitlich korreliert eine Primärwelle detektieren.

5. Erdbebenvorwarnsystem nach einem der Ansprüche 1 bis 4, **dadurch gekennzeichnet, dass** der Alarmgeber (4) von den Detektionseinheiten (1, 2) separat und über den Datenbus (3) aktivierbar ist.

6. Erdbebenvorwarnsystem nach einem der Ansprüche 1 bis 5, **gekennzeichnet durch** wenigstens eine an den Datenbus (3) angeschlossene Gebäudetechnikeinheit (5) zur Steuerung von zumindest Teilkomponenten (6, 7, 8, 9) der Gebäudetechnik eines mittels des Erdbebenvorwarnsystems überwachten Gebäudes (14, 19, 20, 21).

7. Erdbebenvorwarnsystem nach Anspruch 6, **dadurch gekennzeichnet, dass** die Signalverarbeitungsmittel der Detektionseinheiten (1, 2) so eingerichtet sind, dass diese Sekundärwellen von Erdbeben anhand der Signale der Erschütterungssensoren detektieren, wobei zumindest Teilkomponenten (6, 7, 8, 9) der Gebäudetechnik in Abhängigkeit von der Detektion von Sekundärwellen steuerbar sind.

8. Erdbebenvorwarnsystem nach einem der Ansprüche 1 bis 7, **gekennzeichnet durch** wenigstens eine an den Datenbus (3) angeschlossene Bedieneinheit (13) mit Bedien- und Anzeigeelementen zur Steuerung der Detektionseinheiten (1, 2) und zur Abfrage und Anzeige des Betriebszustands des Systems.

9. Erdbebenvorwarnsystem nach einem der Ansprüche 1 bis 8, **gekennzeichnet durch** wenigstens eine Energieversorgungseinheit (10), durch welche die Einzelkomponenten des Systems mit elektrischer Energie versorgt werden.

10. Erdbebenvorwarnsystem nach Anspruch 9, **dadurch gekennzeichnet, dass** die Energieversorgungseinheit (10) eine Batterie oder einen Akkumulator zur vom Stromversorgungsnetz (11) unabhängigen Notversorgung des Systems umfasst.

11. Erdbebenvorwarnsystem nach einem der Ansprüche 9 und 10, **dadurch gekennzeichnet, dass** die Energieversorgungseinheit (10) Anschlüsse für optische und/oder akustische Alarmgeber (4) aufweist.

12. Erdbebenvorwarnsystem nach einem der Ansprüche 1 bis 11, **gekennzeichnet durch** eine mit dem Datenbus (3) verbundene Speichereinheit zur Speicherung der Signale der Erschütterungssensoren.

13. Erdbebenvorwarnsystem nach einem der Ansprüche 1 bis 12, **gekennzeichnet durch** eine Datenfernkommunikationsseinheit zur Datenkommunikation zwischen räumlich entfernten Erdbebenvorwarnsystemen.

## Claims

1. Earthquake alert system having two or more sensors for detecting tremor signals, and having means for electrical signal processing for processing and analyzing the tremor signals, the system comprises at least two detection units (1, 2) that each have a tremor sensor and electronic signal processing means, in each instance, whereby the signal processing means of each detection unit (1, 2) are set up in such a manner that they detect primary waves of earthquakes on the basis of the signal of the tremor sensor, and whereby the detection units (1, 2) are connected with one another by way of an electronic data bus (3), **characterized in that**, the detection units (1, 2) communicate with one another in master/slave mode, by way of the data bus (3), specifically in such a manner that a detection unit (2) being operated in master mode periodically queries the detection units (1) being operated in slave mode, whereby the detection unit (2) being operated in master mode is set up in such a manner that it activates the alarm (4) as a function of the result of the query to the detection units (1) being operated in slave mode, whereby detection units (1,2) are set up that each of the detection units (1,2) connected to one another via the data bus (3) can be operated in master mode or in slave mode, whereby a detection unit (1), operated in slave mode, automatically assumes the function of a master as soon as a detection unit (2), operated in master mode, fails or its connection to the data bus (3) is interrupted.

2. Earthquake alert system according to claim 1, **characterized in that** the signal processing means are furthermore set up in such a manner that they calculate characteristic variables from the detected primary waves, which variables are a measure of the destructive effect of subsequent secondary waves, and that they compare the calculated characteristic variables with threshold values, whereby an alarm (4) is activated as a function of the result of the comparison.

3. Earthquake alert system according to one of claims 1 and 2, **characterized in that** the electronic data bus (3) is configured at least partially as a wireless connection.

4. Earthquake alert system according to claim 1-3, **characterized in that** the detection unit (2) being operated in master mode is furthermore set up in such a manner that the alarm (4) is only activated if the signal processing means of at least two detection units (1, 2) detect a primary wave, with time correlation.

5. Earthquake alert system according to one of claims 1 to 4, **characterized in that** the alarm (4) can be activated separately by the detection units (1, 2) and by way of the data bus (3).

6. Earthquake alert system according to one of claims 1 to 5, **characterized by** at least one building technology unit (5) connected with the data bus (3), for controlling at least partial components (6, 7, 8, 9) of the building technology of a building (14, 19, 20, 21) being monitored by means of the earthquake alert system.

7. Earthquake alert system according to claim 6, **characterized in that** the signal processing means of the detection units (1, 2) are set up in such a manner that they detect secondary waves of earthquakes on the basis of the signals of the tremor sensors, whereby at least partial components (6, 7, 8, 9) of the building technology can be controlled as a function of the detection of secondary waves.

8. Earthquake alert system according to one of claims 1 to 7, **characterized by** at least one operating unit (13) connected with the data bus (3), with operating and display elements for controlling the detection units (1, 2) and for querying and displaying the operating state of the system.

9. Earthquake alert system according to one of claims 1 to 8, **characterized by** at least one power supply unit (10), by means of which the individual components of the system are provided with electrical power.

10. Earthquake alert system according to claim 9, **characterized in that** the power supply unit (10) comprises a battery or a rechargeable battery for providing the system with emergency power, independent of the power network (11).

11. Earthquake alert system according to one of claims 9 and 10, **characterized in that** the power supply unit (10) has connectors for optical and/or acoustical alarms (4).

12. Earthquake alert system according to one of claims 1 to 11, **characterized by** a memory unit connected with the data bus (3) for storing the signals of the tremor sensors.

13. Earthquake alert system according to one of claims 1 to 12, **characterized by** a remote data communication unit for data communication between spatially remote earthquake alarm systems.

## Revendications

1. Système d'alerte sismique précoce comportant deux ou plusieurs capteurs pour capter des signaux de vibrations et comportant des moyens de traitement de signal électronique pour traiter et analyser les signaux de vibrations, dans lequel le système comprend au moins deux unités de détection (1, 2), chacune présentant un capteur de vibrations et des moyens de traitement de signal électronique, dans lequel les moyens de traitement de signal dans chaque unité de détection (1, 2) sont réglés de telle sorte qu'ils détectent des ondes sismiques primaires sur la base du signal provenant du capteur de vibrations, et dans lequel les unités de détection (1, 2) sont connectées ensemble par l'intermédiaire d'un bus de données électronique (3), **caractérisé en ce que**
les unités de détection (1, 2) communiquent ensemble dans un fonctionnement maître/esclave par l'intermédiaire du bus de données (3), en particulier de telle sorte qu'une unité de détection (2) fonctionnant en mode maître interroge périodiquement les unités de détection (1) fonctionnant en mode esclave, dans lequel l'unité de détection (2) fonctionnant en mode maître est réglée de telle sorte qu'elle active l'émetteur d'alarme (4) sur la base du résultat de l'interrogation des unités de détection (1) fonctionnant en mode esclave, dans lequel les unités de détection (1, 2) sont réglées de telle sorte que chacune des unités de détection (1, 2) connectées ensemble par l'intermédiaire du bus de données peut fonctionner aussi bien en mode maître qu'en mode esclave, dans lequel une unité de détection (1) fonctionnant en mode esclave adopte automatiquement la fonction de maître dès que l'unité de détection (2) fonctionnant en mode maître est défaillante ou que sa connexion au bus de données (3) est interrompue.

2. Système d'alerte sismique précoce selon la revendication 1, **caractérisé en ce que** les moyens de traitement de signal sont aussi réglés de telle sorte qu'ils calculent des variables caractéristiques à partir des signaux de vibrations d'ondes primaires détectées, lesquelles variables caractéristiques sont une mesure de l'effet destructeur des ondes secondaires consécutives, et **en ce qu'**ils comparent les variables caractéristiques calculées à des valeurs de seuil, dans lequel l'émetteur d'alarme (4) est activé sur la base du résultat de la comparaison.

3. Système d'alerte sismique précoce selon l'une quelconque des revendications 1 et 2, **caractérisé en ce que** le bus de données électronique (3) est au moins partiellement conçu comme une connexion radio.

4. Système d'alerte sismique précoce selon l'une quelconque des revendications 1 à 3, **caractérisé en ce que** l'unité de détection (2) fonctionnant en mode maître est également réglée de telle sorte que l'émetteur d'alarme (4) n'est activé que si les moyens de traitement de signal d'au moins deux unités de détection (1, 2) détectent une onde primaire de manière corrélée dans le temps.

5. Système d'alerte sismique précoce selon l'une quelconque des revendications 1 à 4, **caractérisé en ce que** l'émetteur d'alarme (4) peut être activé par les unités de détection (1, 2) séparément et par l'intermédiaire du bus de données (3).

6. Système d'alerte sismique précoce selon l'une quelconque des revendications 1 à 5, **caractérisé par** au moins une unité de technologie du bâtiment (5) qui est connectée au bus de données (3) et est prévue pour commander au moins des sous-composants (6, 7, 8, 9) de la technologie du bâtiment dans un bâtiment (14, 19, 20, 21) surveillé au moyen du système d'alerte sismique précoce.

7. Système d'alerte sismique précoce selon la revendication 6, **caractérisé en ce que** les moyens de traitement de signal dans les unités de détection (1, 2) sont réglés de telle sorte qu'ils détectent des ondes sismiques secondaires sur la base des signaux des capteurs de vibrations, dans lequel au moins des sous-composants (6, 7, 8, 9) de la technologie du bâtiment peuvent être commandés sur la base de la détection des ondes secondaires.

8. Système d'alerte sismique précoce selon l'une quelconque des revendications 1 à 7, **caractérisé par** au moins une unité de commande (13) qui est connectée au bus de données (3) et comporte des éléments de commande et d'affichage pour commander les unités de détection (1, 2) et pour interroger et afficher l'état de fonctionnement du système.

9. Système d'alerte sismique précoce selon l'une quelconque des revendications 1 à 8, **caractérisé par** au moins une unité d'alimentation en énergie (10) qui est utilisée pour alimenter en énergie électrique les composants individuels du système.

10. Système d'alerte sismique précoce selon la revendication 9, **caractérisé en ce que** l'unité d'alimentation en énergie (10) comprend une batterie ou une batterie rechargeable pour l'alimentation de secours du système qui est indépendant du réseau d'alimentation électrique (11).

11. Système d'alerte sismique précoce selon l'une quelconque des revendications 9 et 10, **caractérisé en ce que** l'unité d'alimentation en énergie (10) présente des connexions pour des émetteurs d'alarme (4) optiques et/ou acoustiques.

12. Système d'alerte sismique précoce selon l'une quelconque des revendications 1 à 11, **caractérisé par** une unité de stockage qui est connectée au bus de données (3) et est prévue pour stocker les signaux provenant des capteurs de vibrations.

13. Système d'alerte sismique précoce selon l'une quelconque des revendications 1 à 12, **caractérisé par** une unité de communication de données à distance pour une communication de données entre des systèmes d'alerte sismique précoce éloignés dans l'espace.
